# EUROPEAN PATENT APPLICATION

(11) **EP 3 419 351 A1**
(43) Date of publication of application: **26.12.2018**
(21) Application number: 17753523.4
(22) Date of filing: 17.02.2017
(51) Int. Cl.: H04W 60/00, H04W 76/04, H04W 8/02

(54) **METHOD FOR TRANSMITTING/RECEIVING LOCATION REGISTRATION-RELATED MESSAGE IN WIRELESS COMMUNICATION SYSTEM AND APPARATUS FOR SAME**

(30) Priority: 17.02.2016 US 201662296565 P; 20.02.2016 US 201662297800 P; 01.04.2016 US 201662316590 P; 09.10.2016 US 201662405978 P
(71) Applicant: LG Electronics Inc., Seoul 07336 (KR)
(72) Inventor: KIM, Laeyoung, Seoul 06772 (KR); KIM, Hyunsook, Seoul 06772 (KR); RYU, Jinsook, Seoul 06772 (KR); YOUN, Myungjune, Seoul 06772 (KR); KIM, Taehun, Seoul 06772 (KR)
(74) Representative: Katérle, Axel
(86) International application number: PCT/KR2017/001802
(87) International publication number: WO 2017/142362

(57) **Abstract**

An embodiment of the present invention provides a method for transmitting/receiving a location registration-related message by a user equipment (UE) in a wireless communication system, the method comprising the steps of: switching to an idle mode by the UE; transmitting, by the UE, a registration request message including location registration-related information to a AMF (core access and mobility management function) through a RAN (radio access network); and receiving, by the UE, a registration accept message as a response to the registration request message from the AMF through the RAN, wherein the registration request message includes information related to a first PDU (protocol data unit) session for activation.

## Description

### Technical Field

The following description relates to a wireless communication system, and more particularly, to a method for transmitting/receiving a location registration-related message to active a specific session and an apparatus for the same.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

D2D communication is a communication scheme in which a direct link is established between User Equipments (UEs) and the UEs exchange voice and data directly without an evolved Node B (eNB). D2D communication may cover UE-to-UE communication and peer-to-peer communication. In addition, D2D communication may be applied to Machine-to-Machine (M2M) communication and Machine Type Communication (MTC).

D2D communication is under consideration as a solution to the overhead of an eNB caused by rapidly increasing data traffic. For example, since devices exchange data directly with each other without an eNB by D2D communication, compared to legacy wireless communication, network overhead may be reduced. Further, it is expected that the introduction of D2D communication will reduce procedures of an eNB, reduce the power consumption of devices participating in D2D communication, increase data transmission rates, increase the accommodation capability of a network, distribute load, and extend cell coverage.

Currently, discussion on V2X communication associated with D2D communication is in progress. The V2X communication corresponds to a concept including V2V communication performed between vehicle UEs, V2P communication performed between a vehicle and a UE of a different type, and V2I communication performed between a vehicle and an RSU (roadside unit).

### Disclosure

### Technical Problem

An object of the present invention is to provide a location registration-related message that may activate a specific session in a session/connection unit.

It will be appreciated by persons skilled in the art that the objects that could be achieved with the present invention are not limited to what has been particularly described hereinabove and the above and other objects that the present invention could achieve will be more clearly understood from the following detailed description.

### Technical Solution

In one embodiment of the present invention, a method for transmitting/receiving a location registration-related message by a user equipment (UE) in a wireless communication system comprises the steps of shifting the UE to an idle mode; transmitting, by the UE, a registration request message including location registration-related information to a AMF (core access and mobility management function) through a RAN (radio access network); and receiving, by the UE, a registration accept message from the AMF through the RAN as a response to the registration request message, wherein the registration request message includes information related to a first PDU (protocol data unit) session for activation.

In one embodiment of the present invention, a UE for transmitting and receiving a location registration-related message in a wireless communication system comprises a transceiving module; and a processor, wherein the processor transmits a registration request message including location registration-related information to a AMF (core access and mobility management function) through a RAN (radio access network) by using the transceiving module after the UE enters to an IDLE mode, and receives a registration accept message from the AMF through the RAN as a response to the registration request message by using the transceiving module, wherein the registration request message includes information related to a first PDU (protocol data unit) session for activation.

The information related to the first PDU session may be information for identifying the first PDU session.

The UE may transmit uplink data to the RAN, and the uplink data may be delivered to a UPF (User Plane Function) related to the first PDU session.

The first PDU session may be established before the UE enters to the IDLE mode.

The first PDU session may not be disconnected before the UE enters to the IDLE mode.

The location registration-related information may include one or more of information as to periodic location registration, information as to location registration according to movement, and information as to location registration according to UE capability modification.

The UE may transmit a service request message to the AMF through the RAN if uplink data which do not correspond to the first PDU session information and are related to a second PDU session occur.

The service request may include information related to the second PDU session.

The second PDU session may be established before the UE enters to the IDLE mode.

The second PDU session may not be disconnected before the UE enters to the IDLE mode.

The UE may transmit a PDU session establishment request message to the AMF through the RAN if uplink data related to a third PDU session without being established before the UE enters to the IDLE mode occur.

### Advantageous Effects

According to the present invention, much signaling required for a location registration-related procedure and session activation according to the related art may be reduced.

It will be appreciated by persons skilled in the art that that the effects that can be achieved through the present invention are not limited to what has been particularly described hereinabove and other advantages of the present invention will be more clearly understood from the following detailed description.

### Brief Description of the Drawings

The accompanying drawings, which are included to provide a further understanding of the invention, illustrate embodiments of the invention and together with the description serve to explain the principle of the invention.
FIG. 1 is a diagram illustrating a brief structure of an evolved packet system (EPS) that includes an evolved packet core (EPC).
FIG. 2 is an exemplary diagram illustrating an architecture of a general E-UTRAN and a general EPC.
FIG. 3 is an exemplary diagram illustrating a structure of a radio interface protocol on a control plane.
FIG. 4 is an exemplary diagram illustrating a structure of a radio interface protocol on a user plane.
FIG. 5 is a flow chart illustrating a random access procedure.
FIG. 6 is a diagram illustrating a connection procedure in a radio resource control (RRC) layer.
FIG. 7 illustrates a concept of network slicing.
FIGS. 8 and 9 illustrate an architecture reference model available in a 5G system.
FIG. 10 illustrates a procedure of generating a PDU session in a 5G system.
FIG. 11 illustrates a UE triggered service request procedure, and FIG. 12 illustrates a network triggered service request procedure.
FIG. 13 illustrates a location registration-related procedure of a UE according to the embodiment of the present invention.
FIG. 14 illustrates a service request procedure as a response to paging according to the embodiment of the present invention.
FIG. 15 illustrates a relay related operation according to one embodiment of the present invention.
FIG. 16 illustrates a configuration of a node device according to the embodiment of the present invention.

### Best Mode for Carrying Out the Invention

The embodiments below are combinations of components and features of the present invention in a prescribed form. Each component or feature may be considered as selective unless explicitly mentioned as otherwise. Each component or feature may be executed in a form that is not combined with other components and features. Further, some components and/or features may be combined to configure an embodiment of the present invention. The order of operations described in the embodiments of the present invention may be changed. Some components or features of an embodiment may be included in another embodiment or may be substituted with a corresponding component or feature of the present invention.

Specific terms used in the description below are provided to help an understanding of the present invention, and the use of such specific terms may be changed to another form within the scope of the technical concept of the present invention.

In some cases, in order to avoid obscurity of the concept of the present invention, a known structure and apparatus may be omitted, or a block diagram centering on core functions of each structure or apparatus may be used. Moreover, the same reference numerals are used for the same components throughout the present specification.

The embodiments of the present invention may be supported by standard documents disclosed with respect to at least one of IEEE (Institute of Electrical and Electronics Engineers) 802 group system, 3GPP system, 3GPP LTE & LTE-A system and 3GPP2 system. Namely, the steps or portions having not been described in order to clarify the technical concept of the present invention in the embodiments of the present invention may be supported by the above documents. Furthermore, all terms disclosed in the present document may be described according to the above standard documents.

The technolgy below may be used for various wireless communciation systems. For clarity, the description below centers on 3GPP LTE and 3GPP LTE-A, by which the technical idea of the present invention is non-limited.

Terms used in the present document are defined as follows.
- UMTS (Universal Mobile Telecommunications System): a GSM (Global System for Mobile Communication) based third generation mobile communication technology developed by the 3GPP.
- EPS (Evolved Packet System): a network system that includes an EPC (Evolved Packet Core) which is an IP (Internet Protocol) based packet switched core network and an access network such as LTE and UTRAN. This system is the network of an evolved version of the UMTS.
- NodeB: a base station of GERAN/UTRAN. This base station is installed outdoor and its coverage has a scale of a macro cell.
- eNodeB: a base station of LTE. This base station is installed outdoor and its coverage has a scale of a macro cell.
- UE (User Equipment): the UE may be referred to as terminal, ME (Mobile Equipment), MS (Mobile Station), etc. Also, the UE may be a portable device such as a notebook computer, a cellular phone, a PDA (Personal Digital Assistant), a smart phone, and a multimedia device. Alternatively, the UE may be a non-portable device such as a PC (Personal Computer) and a vehicle mounted device. The term "UE", as used in relation to MTC, can refer to an MTC device.
- HNB (Home NodeB): a base station of UMTS network. This base station is installed indoor and its coverage has a scale of a micro cell.
- HeNB (Home eNodeB): a base station of an EPS network. This base station is installed indoor and its coverage has a scale of a micro cell.
- MME (Mobility Management Entity): a network node of an EPS network, which performs mobility management (MM) and session management (SM).
- PDN-GW (Packet Data Network-Gateway) /PGW: a network node of an EPS network, which performs UE IP address allocation, packet screening and filtering, charging data collection, etc.
- SGW (Serving Gateway): a network node of an EPS network, which performs mobility anchor, packet routing, idle-mode packet buffering, and triggering of an MME's UE paging.
- NAS (Non-Access Stratum): an upper stratum of a control plane between a UE and an MME. This is a functional layer for transmitting and receiving a signaling and traffic message between a UE and a core network in an LTE/UMTS protocol stack, and supports mobility of a UE, and supports a session management procedure of establishing and maintaining IP connection between a UE and a PDN GW.
- PDN (Packet Data Network): a network in which a server supporting a specific service (e.g., a Multimedia Messaging Service (MMS) server, a Wireless Application Protocol (WAP) server, etc.) is located.
- PDN connection: a logical connection between a UE and a PDN, represented as one IP address (one IPv4 address and/or one IPv6 prefix).
- RAN (Radio Access Network): a unit including a Node B, an eNode B, and a Radio Network Controller (RNC) for controlling the Node B and the eNode B in a 3GPP network, which is present between UEs and provides a connection to a core network.
- HLR (Home Location Register)/HSS (Home Subscriber Server): a database having subscriber information in a 3GPP network. The HSS can perform functions such as configuration storage, identity management, and user state storage.
- PLMN (Public Land Mobile Network): a network configured for the purpose of providing mobile communication services to individuals. This network can be configured per operator.
- Proximity Services (or ProSe Service or Proximity-based Service): a service that enables discovery between physically proximate devices, and mutual direct communication/communication through a base station/communication through the third party. At this time, user plane data are exchanged through a direct data path without through a 3GPP core network (for example, EPC).

### EPC (Evolved Packet Core)

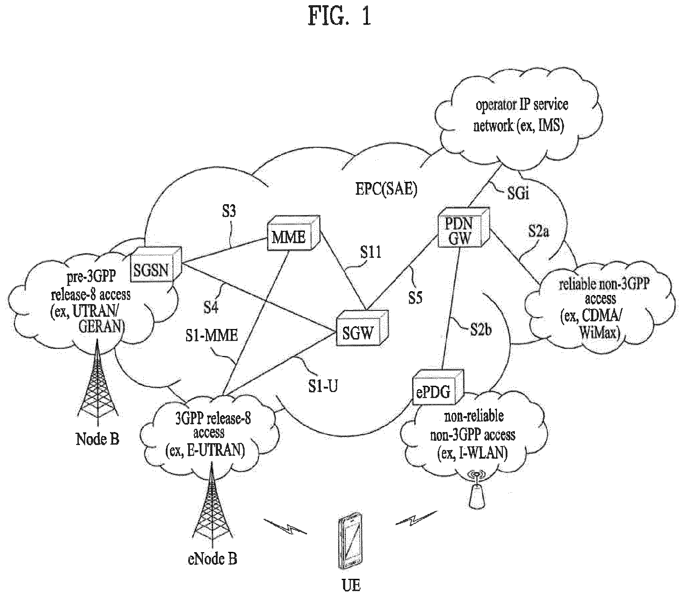

FIG. 1 is a schematic diagram showing the structure of an evolved packet system (EPS) including an evolved packet core (EPC).

The EPC is a core element of system architecture evolution (SAE) for improving performance of 3GPP technology. SAE corresponds to a research project for determining a network structure supporting mobility between various types of networks. For example, SAE aims to provide an optimized packet-based system for supporting various radio access technologies and providing an enhanced data transmission capability.

Specifically, the EPC is a core network of an IP mobile communication system for 3GPP LTE and can support real-time and non-real-time packet-based services. In conventional mobile communication systems (i.e. second-generation or third-generation mobile communication systems), functions of a core network are implemented through a circuit-switched (CS) sub-domain for voice and a packet-switched (PS) sub-domain for data. However, in a 3GPP LTE system which is evolved from the third generation communication system, CS and PS sub-domains are unified into one IP domain. That is, In 3GPP LTE, connection of terminals having IP capability can be established through an IP-based business station (e.g., an eNodeB (evolved Node B)), EPC, and an application domain (e.g., IMS). That is, the EPC is an essential structure for end-to-end IP services.

The EPC may include various components. FIG. 1 shows some of the components, namely, a serving gateway (SGW), a packet data network gateway (PDN GW), a mobility management entity (MME), a serving GPRS (general packet radio service) supporting node (SGSN) and an enhanced packet data gateway (ePDG).

The SGW operates as a boundary point between a RAN (radio access network) and a core network and maintains a data path between an eNodeB and the PDN GW. When. When a terminal moves over an area served by an eNodeB, the SGW functions as a local mobility anchor point. That is, packets. That is, packets may be routed through the SGW for mobility in an evolved UMTS terrestrial radio access network (E-UTRAN) defined after 3GPP release-8. In addition, the SGW may serve as an anchor point for mobility of another 3GPP network (a RAN defined before 3GPP release-8, e.g., UTRAN or GERAN (global system for mobile communication (GSM)/enhanced data rates for global evolution (EDGE) radio access network).

The PDN GW corresponds to a termination point of a data interface for a packet data network. The PDN GW may support policy enforcement features, packet filtering and charging support. In addition, the PDN GW may serve as an anchor point for mobility management with a 3GPP network and a non-3GPP network (e.g., an unreliable network such as an interworking wireless local area network (I-WLAN) and a reliable network such as a code division multiple access (CDMA) or WiMax network).

Although the SGW and the PDN GW are configured as separate gateways in the example of the network structure of FIG. 1, the two gateways may be implemented according to a single gateway configuration option.

The MME performs signaling and control functions for supporting access of a UE for network connection, network resource allocation, tracking, paging, roaming and handover. The MME controls control plane functions associated with subscriber and session management. The MME manages numerous eNodeBs and signaling for selection of a conventional gateway for handover to other 2G/3G networks. In addition, the MME performs security procedures, terminal-to-network session handling, idle terminal location management, etc.

The SGSN handles all packet data such as mobility management and authentication of a user for other 3GPP networks (e.g., a GPRS network).

The ePDG serves as a security node for a non-3GPP network (e.g., an I-WLAN, a Wi-Fi hotspot, etc.).

As described above with reference to FIG. 1, a terminal having IP capabilities may access an IP service network (e.g., an IMS) provided by an operator via various elements in the EPC not only based on 3GPP access but also based on non-3GPP access.

Additionally, FIG. 1 shows various reference points (e.g. S1-U, SI-MME, etc.). In 3GPP, a conceptual link connecting two functions of different functional entities of an E-UTRAN and an EPC is defined as a reference point. Table 1 is a list of the reference points shown in FIG. 1. Various reference points may be present in addition to the reference points in Table 1 according to network structures.

**[Table 1]**

| Reference point | Description |
|---|---|
| S1-MME | Reference point for the control plane protocol between E-UTRAN and MME |
| S1-U | Reference point between E-UTRAN and Serving GW for the per bearer user plane tunneling and inter eNodeB path switching during handover |
| S3 | It enables user and bearer information exchange for inter 3GPP access network mobility in idle and/or active state. This reference point can be used intra-PLMN or inter-PLMN (e.g. in the case of Inter-PLMN HO). |
| S4 | It provides related control and mobility support between GPRS Core and the 3GPP Anchor function of Serving GW. In addition, if Direct Tunnel is not established, it provides the user plane tunneling. |
| S5 | It provides user plane tunneling and tunnel management between Serving GW and PDN GW. It is used for Serving GW relocation due to UE mobility and if the Serving GW needs to connect to a non-collocated PDN GW for the required PDN connectivity. |
| S11 | Reference point between an MME and an SGW |
| SGi | It is the reference point between the PDN GW and the packet data network. Packet data network may be an operator external public or private packet data network or an intra operator packet data network, e.g. for provision of IMS services. This reference point corresponds to Gi for 3GPP accesses. |

Among the reference points shown in FIG. 1, S2a and S2b correspond to non-3GPP interfaces. S2a is a reference point which provides reliable non-3GPP access and related control and mobility support between PDN GWs to a user plane. S2b is a reference point which provides related control and mobility support between the ePDG and the PDN GW to the user plane.

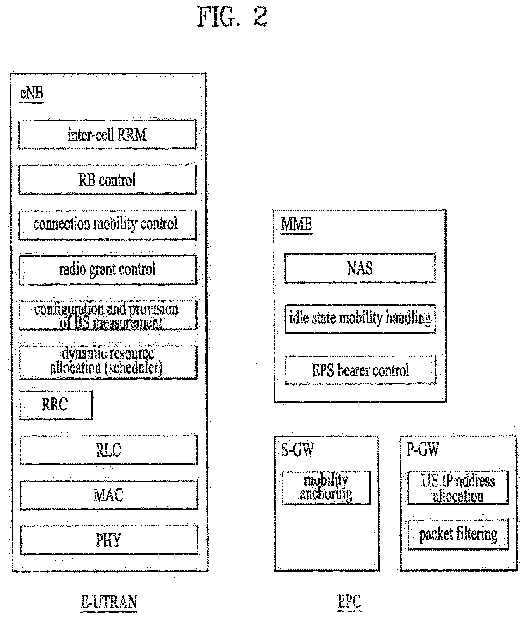

FIG. 2 is a diagram exemplarily illustrating architectures of a typical E-UTRAN and EPC.

As shown in the figure, while radio resource control (RRC) connection is activated, an eNodeB may perform routing to a gateway, scheduling transmission of a paging message, scheduling and transmission of a broadcast channel (BCH), dynamic allocation of resources to a UE on uplink and downlink, configuration and provision of eNodeB measurement, radio bearer control, radio admission control, and connection mobility control. In the EPC, paging generation, LTE_IDLE state management, ciphering of the user plane, SAE bearer control, and ciphering and integrity protection of NAS signaling.

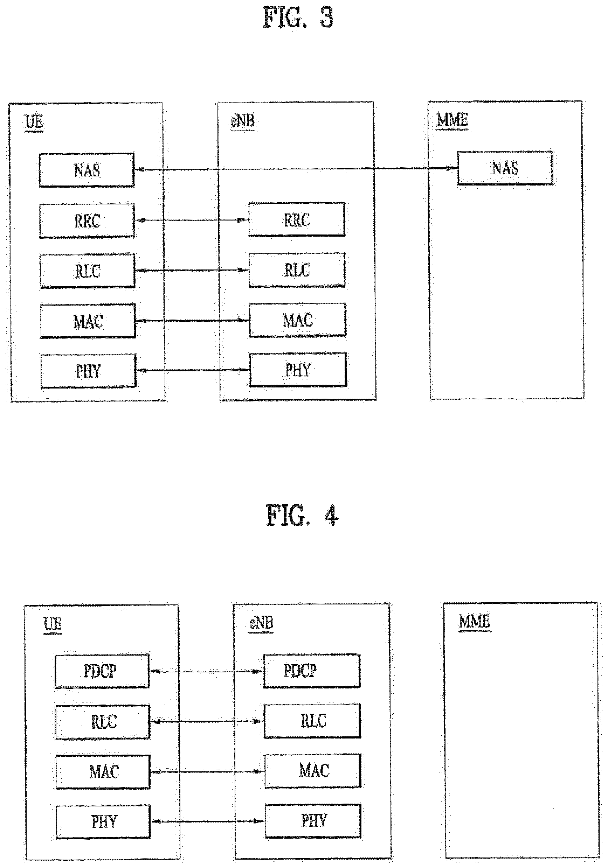

FIG. 3 is a diagram exemplarily illustrating the structure of a radio interface protocol in a control plane between a UE and a base station, and FIG. 4 is a diagram exemplarily illustrating the structure of a radio interface protocol in a user plane between the UE and the base station.

The radio interface protocol is based on the 3GPP wireless access network standard. The radio interface protocol horizontally includes a physical layer, a data link layer, and a networking layer. The radio interface protocol is divided into a user plane for transmission of data information and a control plane for delivering control signaling which are arranged vertically.

The protocol layers may be classified into a first layer (LI), a second layer (L2), and a third layer (L3) based on the three sublayers of the open system interconnection (OSI) model that is well known in the communication system.

Hereinafter, description will be given of a radio protocol in the control plane shown in FIG. 3 and a radio protocol in the user plane shown in FIG. 4.

The physical layer, which is the first layer, provides an information transfer service using a physical channel. The physical channel layer is connected to a medium access control (MAC) layer, which is a higher layer of the physical layer, through a transport channel. Data is transferred between the physical layer and the MAC layer through the transport channel. Transfer of data between different physical layers, i.e., a physical layer of a transmitter and a physical layer of a receiver is performed through the physical channel.

The physical channel consists of a plurality of subframes in the time domain and a plurality of subcarriers in the frequency domain. One subframe consists of a plurality of symbols in the time domain and a plurality of subcarriers. One subframe consists of a plurality of resource blocks. One resource block consists of a plurality of symbols and a plurality of subcarriers. A Transmission Time Interval (TTI), a unit time for data transmission, is 1 ms, which corresponds to one subframe.

According to 3GPP LTE, the physical channels present in the physical layers of the transmitter and the receiver may be divided into data channels corresponding to Physical Downlink Shared Channel (PDSCH) and Physical Uplink Shared Channel (PUSCH) and control channels corresponding to Physical Downlink Control Channel (PDCCH), Physical Control Format Indicator Channel (PCFICH), Physical Hybrid-ARQ Indicator Channel (PHICH) and Physical Uplink Control Channel (PUCCH).

The second layer includes various layers.

First, the MAC layer in the second layer serves to map various logical channels to various transport channels and also serves to map various logical channels to one transport channel. The MAC layer is connected with an RLC layer, which is a higher layer, through a logical channel. The logical channel is broadly divided into a control channel for transmission of information of the control plane and a traffic channel for transmission of information of the user plane according to the types of transmitted information.

The radio link control (RLC) layer in the second layer serves to segment and concatenate data received from a higher layer to adjust the size of data such that the size is suitable for a lower layer to transmit the data in a radio interval.

The Packet Data Convergence Protocol (PDCP) layer in the second layer performs a header compression function of reducing the size of an IP packet header which has a relatively large size and contains unnecessary control information, in order to efficiently transmit an IP packet such as an IPv4 or IPv6 packet in a radio interval having a narrow bandwidth. In addition, in LTE, the PDCP layer also performs a security function, which consists of ciphering for preventing a third party from monitoring data and integrity protection for preventing data manipulation by a third party.

The Radio Resource Control (RRC) layer, which is located at the uppermost part of the third layer, is defined only in the control plane, and serves to configure radio bearers (RBs) and control a logical channel, a transport channel, and a physical channel in relation to reconfiguration and release operations. The RB represents a service provided by the second layer to ensure data transfer between a UE and the E-UTRAN.

If an RRC connection is established between the RRC layer of the UE and the RRC layer of a wireless network, the UE is in the RRC Connected mode. Otherwise, the UE is in the RRC Idle mode.

Hereinafter, description will be given of the RRC state of the UE and an RRC connection method. The RRC state refers to a state in which the RRC of the UE is or is not logically connected with the RRC of the E-UTRAN. The RRC state of the UE having logical connection with the RRC of the E-UTRAN is referred to as an RRC_CONNECTED state. The RRC state of the UE which does not have logical connection with the RRC of the E-UTRAN is referred to as an RRC_IDLE state. A UE in the RRC_CONNECTED state has RRC connection, and thus the E-UTRAN may recognize presence of the UE in a cell unit. Accordingly, the UE may be efficiently controlled. On the other hand, the E-UTRAN cannot recognize presence of a UE which is in the RRC_IDLE state. The UE in the RRC_IDLE state is managed by a core network in a tracking area (TA) which is an area unit larger than the cell. That is, for the UE in the RRC_IDLE state, only presence or absence of the UE is recognized in an area unit larger than the cell. In order for the UE in the RRC_IDLE state to be provided with a usual mobile communication service such as a voice service and a data service, the UE should transition to the RRC_CONNECTED state. A TA is distinguished from another TA by a tracking area identity (TAI) thereof. A UE may configure the TAI through a tracking area code (TAC), which is information broadcast from a cell.

When the user initially turns on the UE, the UE searches for a proper cell first. Then, the UE establishes RRC connection in the cell and registers information thereabout in the core network. Thereafter, the UE stays in the RRC_IDLE state. When necessary, the UE staying in the RRC_IDLE state selects a cell (again) and checks system information or paging information. This operation is called camping on a cell. Only when the UE staying in the RRC IDLE state needs to establish RRC connection, does the UE establish RRC connection with the RRC layer of the E-UTRAN through the RRC connection procedure and transition to the RRC_CONNECTED state. The UE staying in the RRC_IDLE state needs to establish RRC connection in many cases. For example, the cases may include an attempt of a user to make a phone call, an attempt to transmit data, or transmission of a response message after reception of a paging message from the E-UTRAN.

The non-access stratum (NAS) layer positioned over the RRC layer performs functions such as session management and mobility management.

Hereinafter, the NAS layer shown in FIG. 3 will be described in detail.

The eSM (evolved Session Management) belonging to the NAS layer performs functions such as default bearer management and dedicated bearer management to control a UE to use a PS service from a network.. The UE is assigned a default bearer resource by a specific packet data network (PDN) when the UE initially accesses the PDN. In this case, the network allocates an available IP to the UE to allow the UE to use a data service. The network also allocates QoS of a default bearer to the UE. LTE supports two kinds of bearers. One bearer is a bearer having characteristics of guaranteed bit rate (GBR) QoS for guaranteeing a specific bandwidth for transmission and reception of data, and the other bearer is a non-GBR bearer which has characteristics of best effort QoS without guaranteeing a bandwidth. The default bearer is assigned to a non-GBR bearer. The dedicated bearer may be assigned a bearer having QoS characteristics of GBR or non-GBR.

A bearer allocated to the UE by the network is referred to as an evolved packet service (EPS) bearer. When the EPS bearer is allocated to the UE, the network assigns one ID. This ID is called an EPS bearer ID. One EPS bearer has QoS characteristics of a maximum bit rate (MBR) and/or a guaranteed bit rate (GBR).

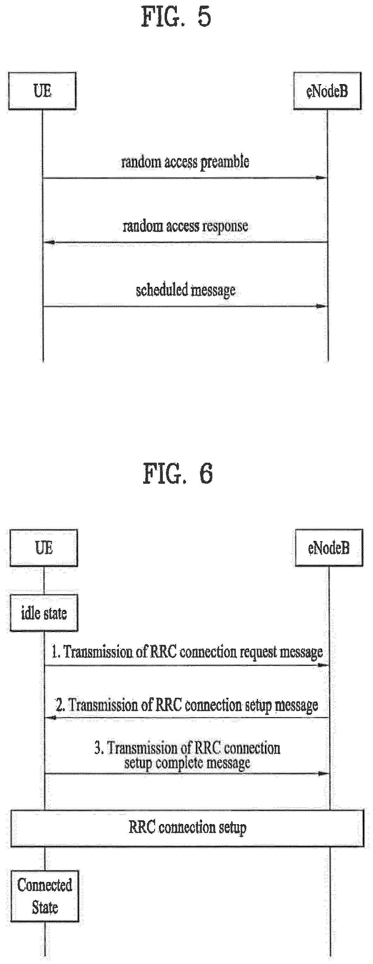

FIG. 5 is a flowchart illustrating a random access procedure in 3GPP LTE.

The random access procedure is used for a UE to obtain UL synchronization with an eNB or to be assigned a UL radio resource.

The UE receives a root index and a physical random access channel (PRACH) configuration index from an eNodeB. Each cell has 64 candidate random access preambles defined by a Zadoff-Chu (ZC) sequence. The root index is a logical index used for the UE to generate 64 candidate random access preambles.

Transmission of a random access preamble is limited to a specific time and frequency resources for each cell. The PRACH configuration index indicates a specific subframe and preamble format in which transmission of the random access preamble is possible.

The UE transmits a randomly selected random access preamble to the eNodeB. The UE selects a random access preamble from among 64 candidate random access preambles and the UE selects a subframe corresponding to the PRACH configuration index. The UE transmits the selected random access preamble in the selected subframe.

Upon receiving the random access preamble, the eNodeB sends a random access response (RAR) to the UE. The RAR is detected in two steps. First, the UE detects a PDCCH masked with a random access (RA)-RNTI. The UE receives an RAR in a MAC (medium access control) PDU (protocol data unit) on a PDSCH indicated by the detected PDCCH.

FIG. 6 illustrates a connection procedure in a radio resource control (RRC) layer.

As shown in FIG. 6, the RRC state is set according to whether or not RRC connection is established. An RRC state indicates whether or not an entity of the RRC layer of a UE has logical connection with an entity of the RRC layer of an eNodeB. An RRC state in which the entity of the RRC layer of the UE is logically connected with the entity of the RRC layer of the eNodeB is called an RRC connected state. An RRC state in which the entity of the RRC layer of the UE is not logically connected with the entity of the RRC layer of the eNodeB is called an RRC idle state.

A UE in the Connected state has RRC connection, and thus the E-UTRAN may recognize presence of the UE in a cell unit. Accordingly, the UE may be efficiently controlled. On the other hand, the E-UTRAN cannot recognize presence of a UE which is in the idle state. The UE in the idle state is managed by the core network in a tracking area unit which is an area unit larger than the cell. The tracking area is a unit of a set of cells. That is, for the UE which is in the idle state, only presence or absence of the UE is recognized in a larger area unit. In order for the UE in the idle state to be provided with a usual mobile communication service such as a voice service and a data service, the UE should transition to the connected state.

When the user initially turns on the UE, the UE searches for a proper cell first, and then stays in the idle state. Only when the UE staying in the idle state needs to establish RRC connection, the UE establishes RRC connection with the RRC layer of the eNodeB through the RRC connection procedure and then performs transition to the RRC connected state.

The UE staying in the idle state needs to establish RRC connection in many cases. For example, the cases may include an attempt of a user to make a phone call, an attempt to transmit data, or transmission of a response message after reception of a paging message from the E-UTRAN.

In order for the UE in the idle state to establish RRC connection with the eNodeB, the RRC connection procedure needs to be performed as described above. The RRC connection procedure is broadly divided into transmission of an RRC connection request message from the UE to the eNodeB, transmission of an RRC connection setup message from the eNodeB to the UE, and transmission of an RRC connection setup complete message from the UE to eNodeB, which are described in detail below with reference to FIG. 6.
1) When the UE in the idle state desires to establish RRC connection for reasons such as an attempt to make a call, a data transmission attempt, or a response of the eNodeB to paging, the UE transmits an RRC connection request message to the eNodeB first.
2) Upon receiving the RRC connection request message from the UE, the ENB accepts the RRC connection request of the UE when the radio resources are sufficient, and then transmits an RRC connection setup message, which is a response message, to the UE.
3) Upon receiving the RRC connection setup message, the UE transmits an RRC connection setup complete message to the eNodeB. Only when the UE successfully transmits the RRC connection setup message, does the UE establish RRC connection with the eNode B and transition to the RRC connected mode.

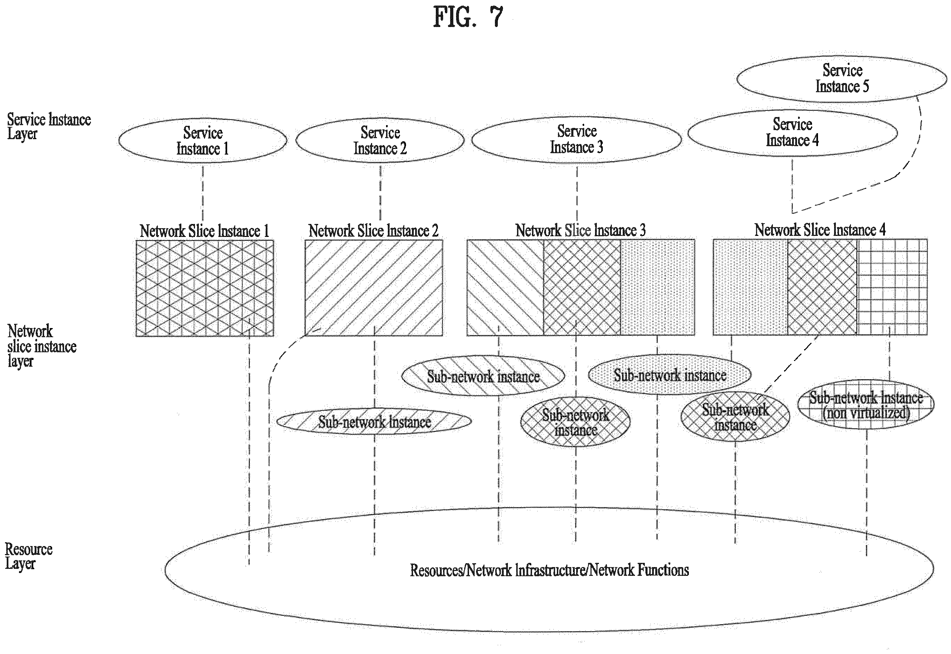

In the legacy LTE/LTE-A system, network functions are performed by a unified core network, whereas the introduction of network slicing has been discussed in a next generation communication system (for example, 5G system). A concept of network slicing is illustrated in FIG. 7. Referring to FIG. 7, network slicing may include three layers of a service instance layer, a network slice instance layer, and a resource layer. The service instance layer represents the services (end-user services or business services) which are to be supported. Each service may be represented by a service instance. Since services may be provided by the network operator or the 3rd parties, a service instance may either represent an operator service or a 3rd party provided service. The network slice instance provides network characteristics required for a service instance. The network slice instance may be shared across multiple service instances provided by the network operator. (Other details of network slicing may be understood with reference to TR 23.799.) The UE may receive services from one or more network slices as illustrated in FIG. 7. Although the UE may receive services from multiple slices and at the same time transmit and receive traffic through multiple slices, the UE may transmit and receive traffic through only one slice at a random time. In the latter case, for example, if Service#1 is provided through Slice#1 and Service#2 is provided through Slice#2, since mobile originated (MO) traffic for Service#1 is generated, the UE may transmit the MO traffic through Slice#1. For another example, in a state that there is no traffic transmitted from and received by the UE (in this case, the UE may be in an idle state in a mobile communication system such as the legacy EPS), if mobile terminated (MT) traffic for Service#2 is generated, the MT traffic may be transmitted to the UE through Slice#2.

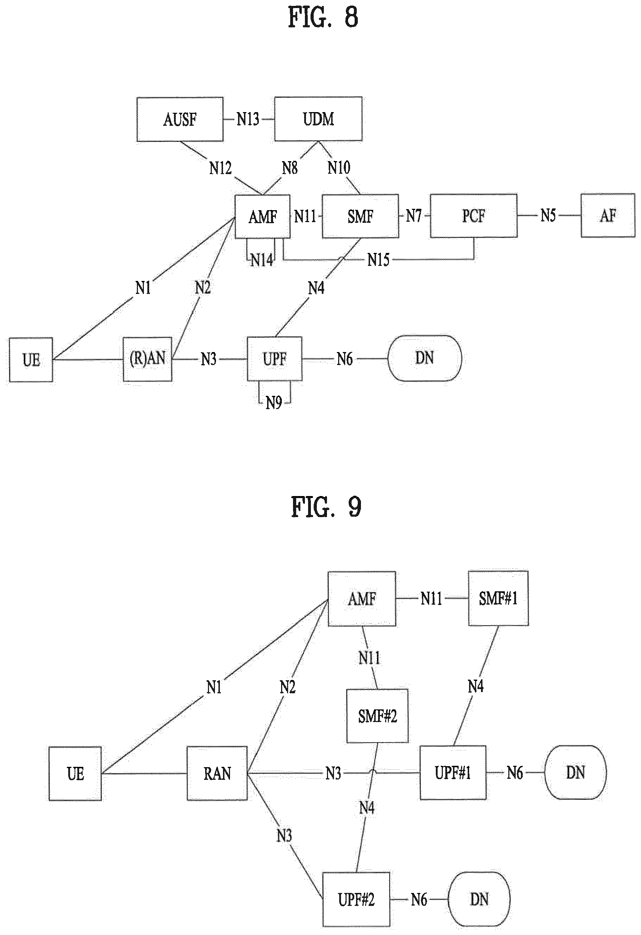

An architecture reference model available in the 5G system is shown in FIG. 8. In the legacy EPC, MME is categorized into AMF(Core Access and Mobility Management Function) and SMF(session Management Function) in a 5G core network (CN). Therefore, NAS interaction and MM (Mobility Management) with the UE are performed by the AMF, and SM (Session Management) is performed by the SMF. Also, the SMF manages a UPF (User plane Function) which is a gateway having a user-plane function, that is, for routing user traffic. In this case, a control-plane portion of S-GW and P-GW in the legacy EPC may be managed by the SMF, and a user-plane portion may be managed by the UPF. For routing of user traffic, one or more UPFs may exist between RAN and DN (Data Network).

As a concept corresponding to PDN connection in the legacy EPS, a PDU (Protocol Data Unit) session is defined in the 5G system. The PDU session refers to association between a UE, which provides PDU connectivity services of Ethernet type or unstructured type as well as IP type, and a DN. In addition, a UDM (Unified Data Management) performs a function corresponding to HSS of EPC, and PCF (Policy Control Function) performs a function corresponding to PCRF of the EPC. To satisfy requirements of the 5G system, the functions may be provided in an enlarged type. Details of the 5G system architecture, each function and each interface follows TS 23.501.

One GW connected with RAN with respect to one UE may exist in the legacy EPS. That is, as a GW for serving the UE, one S-GW may exist. However, there is no such restriction in the 5G system. For example, as shown in FIG. 9, if the UE generates two PDU session, one of the PDU sessions may be generated through UPF#1, and the other one may be generated through UPF#2. That is, only one S-GW having S1-U connection relation with the eNB exists in the EPS even though the UE generates a plurality of PDN connections, whereas a plurality of UPFs having N3 connection relation with RAN may exist in the 5G system if the UE generates a plurality of PDU session. For convenience, functions such as UDM and PCF are not shown in FIG. 9. Also, although one UPF is shown in FIG. 9 between RAN and DN with respect to one PDU session, a plurality of UPFs may be involved. Also, SMF#1 and UPF#1 for PDU session#1 may belong to slice#1, and SMF#2 and UPF#2 for PDU session#2 may belong to slice#2. Even though a plurality of SMFs and UPFs exist for the UE, one AMF for performing NAS interaction with the UE and NM exists for the UE.

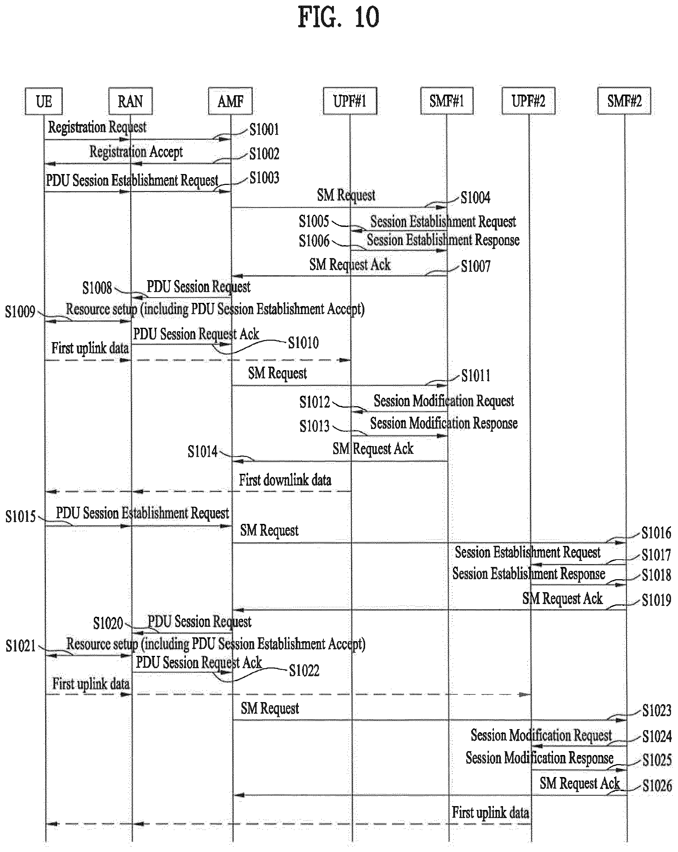

A procedure for generating two PDU sessions after attachment to the 5G system is shown in FIG. 10. Referring to FIG. 10, the UE transmits a registration request message to the network for attachment in step S1001. The transmitted registration request message is transmitted to the AMF through the RAN. The message includes information (e.g., initial registration) for indicating attachment of the UE. Also, the message may include slice related information (or assistance information that may be used when the network selects slice for the UE) that may be serviced to the UE. In step S1002, the AMF transmits a registration accept message to the UE. A detailed procedure performed by the network for attachment of the UE is omitted and will be understood with reference to clause 4.2.2 of TS 23.502 (Registration procedures). In step S1003, the UE transmits a PDU session establishment request message to the AMF to generate a new PDU session. At this time, the UE may include DN information, slice related information, and identification information (e.g., PDU session ID) for identifying the generated PDU session in the PDU session to be generated. In step S1004, the AMP selects SMF to generate a PDU session requested by the UE and then transmits SM request message for delivering the PDU session establishment request message to the corresponding SMF (that is, SMF#1). In step S1005, SMF#1 selects UPF and transmits the session establishment request message to the corresponding UPF (that is, UPF#1). The message includes various kinds of information on the generated PDU session, for example, Packet detection, enforcement and reporting rules. In step S1006, UPF#1 responds to SMF#1 as a session Establishment Response message.

In step S1007, SMF#1 transmits SM Request Ack message to the AMF. The SM Request Ack message includes information provided to the RAN by the AMF with respect to the generated PDU session, for example, PDU session ID, QoS Profile, CN Tunnel information, etc. The CN Tunnel information corresponds to N3 tunnel information for uplink between UPF#1 and RAN. Also, the SM request Ack message includes a PDU session establishment accept message transmitted from the AMF to the UE. In step S1008, the AMF transmits a PDU session Request message to the RAN. This message includes PDU session related information received by the AMF from SMF#1 and the PDU session establishment accept message to be delivered to the UE. In step S1009, the RAN performs user-plane resource setup through interaction with the UE on the basis of the PDU session related information received from the AMF. Also, in this procedure, the RAN delivers the PDU session Establishment Accept message to the UE. In step S1010, the RAN transmits the PDU session Request Ack message to the AMF. The message includes RAN Tunnel information which corresponds to N3 tunnel information for downlink between the RAN and UPF#1.

Afterwards, the UE may transmit uplink data with respect to the generated PDU session, wherein the uplink data may be transmitted to UPF#1 through the RAN.

Subsequently, in step S1011, the AMF transmits the SM Request message to the SMF#1 to deliver the information provided by the RAN. In step S1012, SMF#1 transmits a session Modification Request message to UPF#1 to deliver the information provided by the RAN. In step S1013, UPF#1 responds to SMF#1 as a session Modification Response message. In step S1014, SMF#1 responds to the AMF as an SM Request Ack message. The UPF#1 may transmit downlink data to the UE.

Details of the procedure of generating a PDU session will be understood with reference to clause 4.3.2.2 of TS 23.502 (UE requested PDU session Establishment).

In step S1015, the UE transmits the PDU session Establishment Request message to the AMF to generate a new PDU session different from the PDU session generated as above. Steps S1015 to S1026 follow the description of the steps S1003 to S1014 except that SMF#2 is selected as SMF and UPF#2 is selected as UPF for a PDU session which is newly generated.

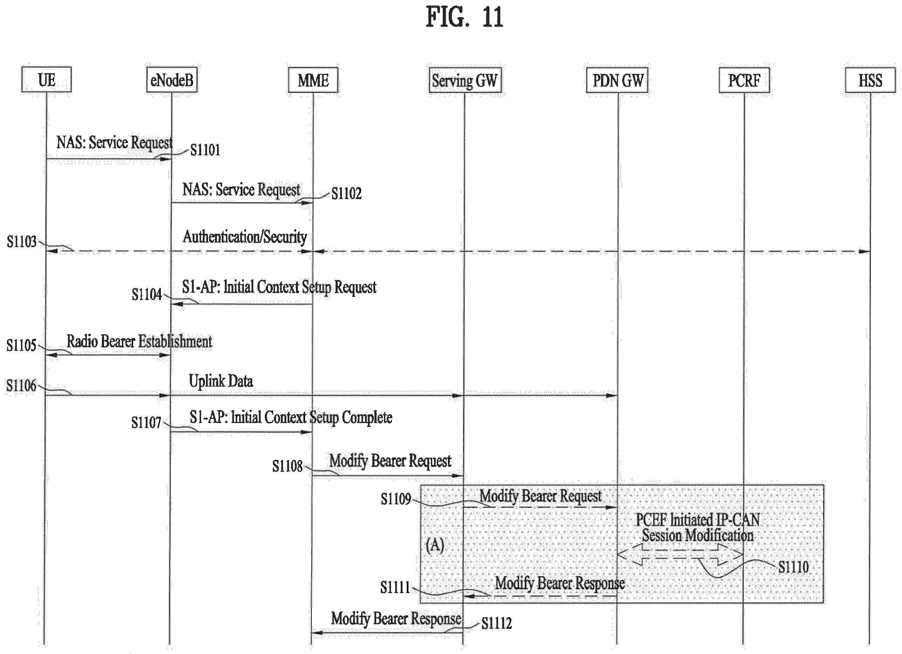

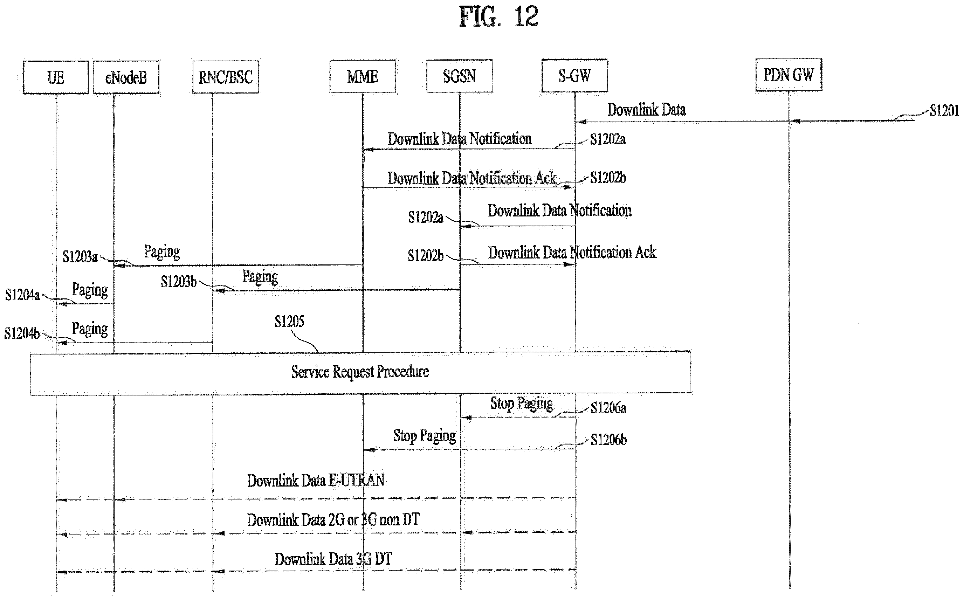

A UE triggered service request procedure is shown in FIG. 11, and a network triggered service request procedure is shown in FIG. 12. In the UE triggered service request procedure (In case of the network triggered service request procedure, the UE triggered service request procedure is performed after paging the UE), a main procedure is to make a user plane between the UE and the RAN (LTE-Uu) and between the RAN and the CN (S1-U) to provide services to the UE. At this time, the user plane is formed (or activated) in the above intervals with respect to all PDN connections regardless of PDN connection through which traffic to be transmitted to or received by the UE is transmitted. Messages used for paging and the service request procedure do not include information on PDN connection or bearer to be activated. In this way, if all user planes (between the UE and the RAN and between the RAN and the CN GW) are formed with respect to the UE when services are initiated/resumed, inefficiency may be caused in view of resource management. For example, the UE receives Service#1 through Slice#1 and receives Service#2 through Slice#2. In this case, it is considered that RAN#1 and CN GW#1 provide services to the UE through Slice#1, and RAN#1 and CN GW#2 provide services to the UE through Slice#2. At this time, since mobile originated (MO) traffic for Service#1 is generated, the UE may transmit the MO traffic through Slice#1. Afterwards, despite that there is no traffic for Service#2, resource allocation for Service#2 between the UE and RAN#1 is performed and a user plane between RAN#1 and CN GW#2 is formed, whereby a problem occurs in that resource waste may be caused. For another example, as the UE generates a plurality PDU sessions, a plurality of UPFs connected with the RAN through N3 interface may exist, and the UE may use only some N3 not all N3 (RAN and UPF intervals) at some time. In spite of this case, if a user plane is formed for all of N3 intervals, a problem occurs in that resource waste is caused.

Therefore, activation related procedures of PDN/PDU connection for solving such inefficiency will be described hereinafter. The following description includes the description based on the 5G system and the description based on the LTE/LTE-A system. For clarity, the 5G system and the LTE/LTE-A system are described respectively but the description of any one system may be applied to a UE and network node/function, which perform a similar function in the other system.

### PDU connection activation in location registration related procedure

When a UE which enters to an IDLE mode after being attached to the 5G system transmits a registration request message to a network to perform location registration, the UE may include information on PDU session desired by the UE in the registration request. That is, the UE transmits the registration request message, which includes location registration-related information, to a RAN (Radio Access Network), wherein the registration request message includes information related to a first PDU session for activation. In this case, the information related to the first PDU session may be information for identifying the first PDU session. Also, only a network node related to the information for identifying the first PDU session may receive context of the UE. For example, only network node/functions corresponding to a specific slice shown in FIG. 7 may receive context of the UE. Through this information, the AMF may identify that the PDU session to be activated for the UE is the first PDU session and perform the procedure for the PDU session. Alternatively, the AMF which has received the information may transmit N11 message to SMF related to the first PDU session to activate the first PDU session. Details related to this case will be described later.

The location registration may be intended for periodic location registration, or may be intended for location registration performed as the UE moves to get out of a zone of which location is previously registered. However, without limitation to this case, the location registration may be location registration intended for various purposes such as location registration performed by the UE to notify the network of changed capability information.

The first PDU session is established before the UE enters to the IDLE mode. The first PDU session is not disconnected before the UE enters to the IDLE mode. If the first PDU session is not established before the UE enters to the IDLE mode or if the first PDU session is disconnected before the UE enters to the IDLE mode, the UE transmits a PDU session establishment request message to the core network through the RAN. That is, if a third PDU session information is not established before the UE enters to the IDLE mode without corresponding to the first PDU session information and uplink data related to the third PDU session occur, the UE may transmit the PDU session establishment request message to the core network.

In this way, when the location registration related procedure is performed, the UE may perform activation per PDU session unit by transmitting information on a PDU session to be activated, whereby efficient signaling may be performed. In more detail, in the GPRS, the UE cannot perform a request to activate PDP context desired to be served while performing location registration (routing area update). For this reason, even though uplink data occur at the time when location registration is to be performed, the location registration procedure should first be completed to perform the service request procedure for activating all of PDP contexts. In this case, a problem occurs in that delay in providing services to a user occurs. In case of the EPS, if uplink data occur at the time when the UE intends to perform location registration (Tracking Area Update), occurrence of uplink data may be notified to a TAU request. However, for this reason, the MME is defined to activate all of PDN connections generated by the UE as well as PDN connection for uplink data.

In addition, in the 5G system, since network functions exist in a more subdivided type and each PDU session may be served from SMF/UPF belonging to their respective slices unlike the EPS, signaling according to activation of the PDU session is more required. Therefore, a task for releasing a user plane resource between the RAN and the UPF for all PDU sessions activated when the UE enters to the IDLE mode. This requires more signaling exchanges between the AMF and the SMF and between the SMF and the UPF. Furthermore, if the SMF/UPF are respectively divided for each PDU session, more signaling is caused. Therefore, as described above, PDU session information to be activated may be included in the location registration related procedure to activate a specific PDU only, whereby unnecessary signaling may be reduced.

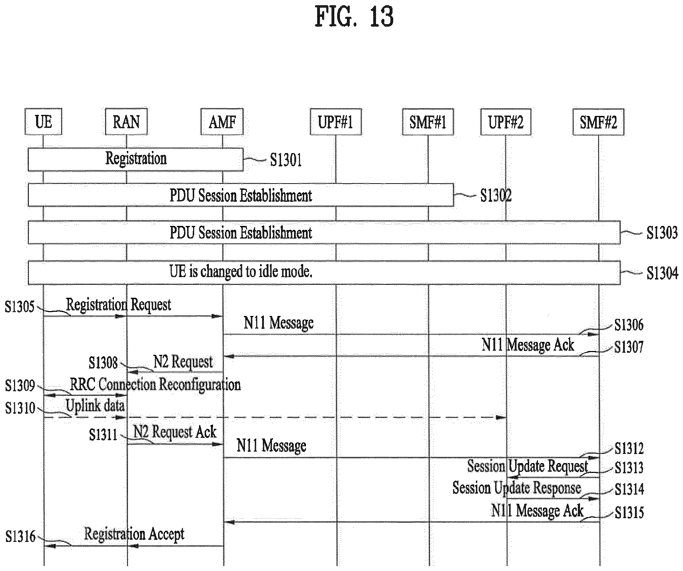

The location registration related procedure of the UE related to the aforementioned description is shown in detail in FIG. 13. Referring to FIG. 13, in step S1301, the UE is attached to the 5G system. In step S1302, the UE generates PDU session#1. For PDU session #1, SMF#1 and UPF#1 are selected. In step S1303, the UE generates PDU session #2. Description of a procedure of generating the PDU sessions #1 and #2 will be replaced with the steps S1003 to S1014 and S1015 to S1026 of FIG. 10.

In step S1304, the UE enters to IDLE mode from RRC connected mode. For this reason, N3 tunnel formed by RAN and UPF#1 and N3 tunnel formed by RAN and UPF#2 are released for the UE. Also, radio resources formed between the UE and the RAN are released. That is, user planes in an interval of the UE and the RAN and an interval of the RAN and the CN are all released. This is because that there is no data traffic or signaling between the UE and the network as a main example that the UE enters to the IDLE mode.

In step S1305, the UE transmits a registration request message for location registration to the AMF. The registration request message is transmitted to the AMF through the RAN. The message includes location registration-related information, that is, information (e.g., periodic location registration, location registration according to movement, location registration according to UE capability change, etc.) indicating reason/object for performing location registration. The UE may include PDU session information (PDU session #2) to be serviced, that is, to be activated, in the registration request message. A main reason why the UE intends to activate PDU session #2 is that data to be transmitted through PDU session#2 have occurred.

In step S1306, the AMF transmits N11 message to SMF#2 to activate the PDU session #2. The SMF#2 is SMF (see step S1016 of FIG. 10) selected by the AMF to generate PDU session #2, and if the PDU session #2 is generated, the AMF manage/store SMF for the PDU session #2. In step S1307, the SMF#2 transmits N11 Message Ack message to the AMF. This message includes QoS profile provided to the RAN and CN Tunnel information. The CN Tunnel information corresponds to N3 tunnel information for uplink between UPF#2 and the RAN. In step S1308, the AMF transmits N2 request message to the RAN. At this time, the N2 request message includes information received from SMF#2. In step S1309, the RAN performs user-plane resource setup through interaction with the UE on the basis of PDU session related information received from the AMF.

In step S1310, the UE transmits uplink data, which are pending, through the PDU session #2.

Subsequently, in step S1311, the RAN transmits N2 Request Ack message to the AMF. The message includes RAN Tunnel information, which corresponds to N3 tunnel information for downlink between the RAN and UPF#2. In step S1312, the AMF transmits N11 message to the SMF#2 to provide information received from the RAN.

In step S1313, the SMF#2 transmits a Session Update Request message to the UPF#2 to deliver information provided by the RAN. In step S1314, the UPF#2 responds to the SMF#2 as a Session Update Response message. In step S1315, the SMF#2 responds to the AMF as N11 Message Ack message. In step S1316, the AMF transmits a Registration Accept message to the UE.

### PDU connection activation in paging and service request procedure

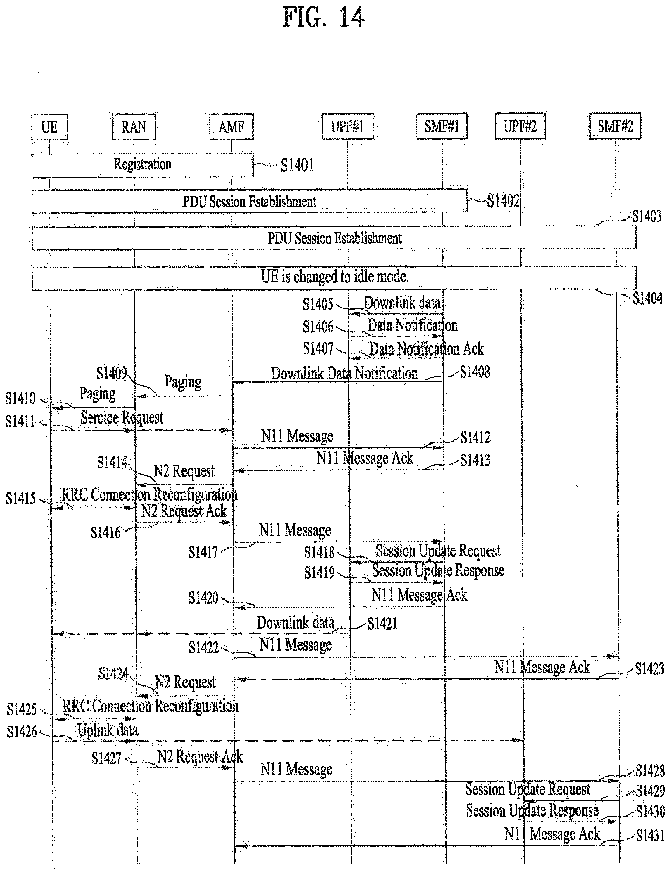

FIG. 14 illustrates an embodiment that a specific PDU session is activated in a service request procedure as a response to paging. If uplink data related to a second PDU session are generated, information related to the second PDU session may be included in a service request message transmitted from the UE to the core network through the RAN. In this case, the second PDU session is established before the UE enters to the IDLE mode, and is not disconnected before the UE enters to the IDLE mode. The reason why the UE includes information related to the second PDU session may be, but not limited to, that the second PDU session is not the PDU session for downlink data for generating paging. If the uplink data related to the second PDU session are generated, the UE may include information related to the second PDU session in the service request message. Referring to FIG. 14, in step S1401, the UE is attached to the 5G system. In step S1402, the UE generates a PDU session. The procedure of generating a PDU session follows the steps S1003 to S1014 of FIG. 10. Therefore, it is assumed that SMF selected for this PDU session is SMF#1 and UPF is UPF#1. For convenience, the generated PDU session is PDU session#1. In step S1403, the UE generates a PDU session. The procedure of generating a PDU session follows S1015 to S1026 of FIG. 10. Therefore, it is assumed that SMF selected for this PDU session is SMF#2 and UPF is UPF#2. For convenience, the generated PDU session is PDU session#2.

In step S1404, the UE enters to IDLE mode from RRC connected mode. For this reason, N3 tunnel formed by RAN and UPF#1 and N3 tunnel formed by RAN and UPF#2 are released for the UE. Also, radio resources formed between the UE and the RAN are released. That is, user planes in the interval of the UE and the RAN and the interval of the RAN and the CN are all released. This is because that there is no data traffic or signaling between the UE and the network as a main example that the UE enters to the IDLE mode.

In step S1405, downlink data headed for the UE are arrived at UPF#1 (the legacy SGW). Since N3 tunnel with the RAN does not exist, the UPF stores downlink data. In step S1406, UPF#1 transmits a data notification message to SMF#1. At this time, the message includes information (e.g., PDU session ID) indicating a PDU session to which downlink data belong. In step S1407, SMF#1 responds to UPF#1 as a Data Notification Ack message. In step S1408, SMF#1 transmits a message for indicating that downlink data for PDU session#1 have been arrived, that is, a downlink data notification message to the AMF. In step S1409, the AMF transmits a paging message to the RAN to page the UE because the UE is in the IDLE mode. At this time, the AMF may include PDU session information on downlink data in the paging message. Details will be understood with reference to a network triggered service request procedure and/or a PDU session activation procedure in the 5G system, which will be described later.

In step S1410, the RAN pages the UE. In step S1411, the UE which has received paging transmits the service request message to the AMF to respond to paging. The UE may include PDU session information to be serviced, that is, to be activated, in the service request message. In this embodiment, it is assumed that the message includes information to activate PDU session#2. Details will be understood with reference to the network triggered service request procedure and/or the PDU session activation procedure in the 5G system, which will be described later. The service request message may include PDU session information to be serviced, that is, to be activated. A main reason why the UE intends to activate PDU session #2 is that data to be transmitted through PDU session#2 have occurred. If the PDU session information is included in the received paging message, the UE may include the PDU session information in the service request message.

In step S1412, the AMF transmits N11 message to SMF#2 to activate the PDU session #1. In step S1413, the SMF#1 transmits N11 Message Ack message to the AMF. This message includes QoS profile provided to the RAN and CN Tunnel information. The CN Tunnel information corresponds to N3 tunnel information for uplink between UPF#1 and the RAN. In step S1414, the AMF transmits N2 request message to the RAN. At this time, the N2 request message includes information received from SMF#1. In step S1415, the RAN performs user-plane resource setup through interaction with the UE on the basis of PDU session related information received from the AMF. In step S1416, the RAN transmits N2 request Ack message to the AMF. This message includes RAN Tunnel information which corresponds N2 tunnel information for downlink between the RAN and UPF#1. In step S1417, the AMF transmits N11 message to SMF#1 to provide information received from the RAN. In step S1418, the SMF#1 transmits a Session Update Request message to the UPF#1 to deliver information provided by the RAN. In step S1419, the UPF#1 responds to the SMF#1 as a Session Update Response message. In step S1420, the SMF#1 responds to the AMF as N11 Message Ack message. In step S1421, the UPF#1 transmits downlink data stored therein to the UE.

Subsequently, in step S1422, the AMF transmits N11 message to SMF#2 to activate the PDU session #2. In step S1423, the SMF#2 transmits N11 Message Ack message to the AMF. This message includes QoS profile provided to the RAN and CN Tunnel information. The CN Tunnel information corresponds to N3 tunnel information for uplink between UPF#2 and the RAN. In step S1424, the AMF transmits N2 request message to the RAN. At this time, the N2 request message includes information received from SMF#2. In step S1425, the RAN performs user-plane resource setup through interaction with the UE on the basis of PDU session related information received from the AMF. In step S1426, the UE transmits uplink data, which are pending, through the PDU session #2. In steps S1427 to S1431, SMF#1 is replaced with SMF#2 and UPF#1 is replaced with UPF#2, whereby the same procedure as that in the steps S1416 to S1420 is performed.

The steps S1422 to S1431 may be performed prior to the steps S1412 to S1421, and the steps S1412 to S1421 and the steps S1422 to S1431 maybe performed at the same time or in parallel. In case of the latter case, N2 request message transmitted from the AMF to the RAN, in steps S1414 and 1424, one N2 request, which includes two kinds of PDU session related information, may be transmitted, or a subsequent resource setup operation (steps S1415 and S1425) between the RAN and the UE and N2 request Ack message (steps S1416 and S1427) transmitted from the RAN to the AMF may be processed by combination. If the UE generates three PDU sessions (that is, PDU session#1, PDU session#2, and PDU session#3) after attachment, the UE may perform the service request procedure as shown in FIG. 14 in response to paging, whereby the UE may be shifted from the IDLE mode to the RRC connected mode and perform a procedure of activating PDU session#3 in a state that PDU session#1 and PDU session#2 are activated.

As described above, if the service request procedure is performed as a response to PS paging according to one embodiment of the present invention, delay that may occur in accordance with the related art may be reduced remarkably. In more detail, in case of E-UTRAN and 5G Radio, since PS network is only supported, all services including voice service and SMS are supported by the PS network. Therefore, paging may occur in the EPS and 5G system more frequently than the GERAN/UTRAN. If uplink data have occurred in the UE at the time when the UE requests a service in response to paging but a request for activating a PDU session cannot be included in the service request message in the same manner as the GPRS, the UE cannot transmit the uplink data until the service request procedure for responding to paging ends. For example, it is assumed that uplink data for PDU session#2 have occurred in the UE just before the step S1411 in FIG. 14. However, the UE transmits the service request message to respond to paging. In this case, PDU session#1 is activated. The UE may resume the service request procedure for activating PDU session#2 after the service request procedure is completed. This is because that another service request procedure cannot be resumed before one procedure is completed. Therefore, the UE may transmit pending data to the network after a user plane resource with the RAN is setup by transmitting the service request message for activating PDU session#2 to the AMF. This causes service delay of the user. As described above, this delay may be reduced by including PDU session information in the service request message for (PS) paging and selectively activating PDU session when the service request message is transmitted.

### UE triggered service request

The UE triggered service request basically follows the procedure shown in FIG. 11 and the description of TS 23.401. Hereinafter, details modified/added by the embodiment of the present invention will be described. In step S1101, the UE includes information (this may be PDN connection used when MO traffic is transmitted) on PDN connection to be serviced and/or information (this may be a bearer used when MO traffic is transmitted) on a bearer in the service request message when the service request message is transmitted. The information may be one or more of APN information, default bearer ID of PDN connection, and bearer ID. However, without limitation to this case, the information may be information which the MME may recognize service, PDN connection or bearer, which is desired to be provided by the UE. If the UE intends to receive service through a plurality of PDN connections, the UE includes information on all PDN connections to be serviced in the information. If the UE intends to receive service through a plurality of bearers, the UE includes information on all bearers to be serviced in the information.

In the related art, when the UE needs to initiate/resume a service in an IDLE state, the UE has transmitted the service request message to the MME. However, in the present invention, the UE performs UE triggered service request operation when the UE intends to activate a PDN connection related user plane (that is, when the UE intends to activate a necessary radio bearer with the eNodeB) to be serviced regardless of the IDLE state or the connected state of the UE.

If a UE-to-Network Relay serves a Remote UE, the service request message may be generated from the Remote UE and transmitted to the MME through the UE-to-Network Relay, or may be generated by the UE-to-Network Relay and transmitted to the MME. In case of the latter case, various message generation triggering conditions may exist. For example, a request may be received from the Remote UE and MO traffic may be received from the Remote UE, and paging for the remote UE may be received from the network. The service request message may include information (this is a UE that has generated MO traffic and may be identification information of the remote UE) on the remote UE (regardless of an entity that has generated the information). At this time, the service request message may include the information on PDN connection and/or the information on a bearer or may include only the information on the Remote UE. If a bearer is shared between the remote UEs, the service request message may include information indicating service initiation (or bearer) for the remote UE instead of an identifier of the remote UE. Also, if the UE-to-Network Relay not the remote UE intends to initiate a service for its bearer, information indicating service initiation (or bearer) for the UE-to-Network Relay may be included in the service request message. This may generally be applied to the present invention.

In step S1104, when the MME transmits an initial context setup request message to the eNodeB, the MME includes PDN connection to be serviced by the UE and/or bearer and/or context information on the UE (Remote UE/UE-to-Network Relay) in the initial context setup request message. Therefore, if information on PDN connection to be serviced, not the information on a bearer, and/or information on the UE is included in the information transmitted from the UE, based on this information, bearer related information may be included in the initial context setup request message.

In step S1105, the eNodeB forms a radio bearer with the UE on the basis of the information received from the MME in the step S1104. If the radio bearer is formed such that the UE-to-Network Relay may provide the Remote UE with network connection service, an operation for allowing the UE-to-Network Relay to notify the remote UE that the radio bearer has been generated may additionally be performed.

In step S1108, the MME includes PDN connection desired by the UE to receive service and/or bearer and/or context information on UE (Remote UE/UE-to-Network Relay) in the message transmitted to the S-GW. Therefore, if information on PDN connection to be serviced, not the information on a bearer, and/or information on the UE is included in the message, based on this information, bearer related information may be included in the message. As a result, a user plane is formed for only PDN connection and/or bearer desired by the UE to receive service between the UE and the eNodeB and between the eNodeB and the S-GW (or user plane resource is allocated or bearer is activated).

If one PDN connection is conventionally generated by the UE, the MME may not include context information on PDN connection desired by the UE to receive service in the message transmitted to the eNB and the S-GW in the steps S1104 and S1108. This may generally be applied to the present invention.

If a plurality of PDN connections are conventionally generated by the UE, the MME may include context information on PDN connection desired by the UE to receive service and context information on the other PDN connections in the message transmitted to the eNB and the S-GW in the steps S1104 and S1108. This may mean context information on all PDN connections previously generated by the UE. Also, context information on all PDN connections previously generated by the UE may not be included in the message, whereby the same effect may be obtained. The MME may determine PDN connection, which provides or does not provide information, on the basis of subscriber information, UE context information, operator policy and local configuration. The information may be information set to the MME, information (e.g., HSS, eNB, etc.) acquired from another network, and information acquired from the UE. This may generally be applied to the present invention.

### Network triggered service request operation

Network triggered service request basically follows the procedure shown in FIG. 12 and description of TS 23.401. Hereinafter, details modified/added by the embodiment of the present invention will be described.

In step S1212a, in the related art, when the network needs service initiation/resume in case of IDLE state of the UE, if the S-GW receives downlink traffic to the UE from the P-GW, the UE transmits DDN message for requesting paging to the MME. However, in the present invention, when the UE intends to activate a user plane related to PDN connection and/or bearer to be serviced regardless of the IDLE state or the connected state of the UE (that is, in view of the S-GW, when the S-GW intends to activate S1 bearer required with eNodeB), the UE transmits DDN message to the MME.

If the UE is already in the connected state (this case may be the connected state because S1 bearer for other service already exists or the UE is performing direct discovery and/or direct communication operation), the MME may perform only an operation for forming a necessary user plane without paging to the UE when receiving DDN message from the S-GW. In this case, the steps S1203a and S1204a are skipped, and step S1104 in FIG. 11 is performed in step S1205. If the UE-to-Network Relay serves the Remote UE, and if the user plane to be formed is for the remote UE, the MME may perform paging even though the UE-to-Network Relay is in the connected state. Alternatively, if the user plane to be formed is for the UE-to-Network Relay, the MME may perform paging even though the UE-to-Network Relay is in the connected state to serve the Remote UE.

### Option#1

In step S1213a, when the MME transmits a paging message, the MME includes information (this may be PDN connection used when MT traffic is transmitted) on PDN connection desired to provide services and/or bearer (this may be a bearer used when MT traffic is transmitted) and/or UE (this is a destination UE of MT traffic or is remote UE or UE-to-Network Relay) in the paging message. The information may be one or more of APN information, default bearer ID of PDN connection, bearer ID, and remote UE identifier. However, without limitation to this case, the information may be information which the UE may recognize service, PDN connection or bearer, which is provided. If the MME intends to provide services through a plurality of PDN connections, the MME includes information on all PDN connections to be serviced in the information. If the MME intends to provide services through a plurality of bearers, the MME includes information on all bearers to be serviced in the information.

A method for identifying PDN connection desired by the MME to provide services and/or bearer and/or UE (Remote UE/UE-to-Network Relay) may be based on information in the DDN message received from the S-GW through step S1202a.

In step S1215, the UE includes information on PDN connection and/or bearer and/or UE, which is desired to receive service described in the step S1101 of FIG. 11, in the service request message when the UE transmits the service request message to the MME on the basis of the information on PDN connection and/or bearer and/or UE (Remote UE/UE-to-Network Relay) included by the MME as described above. Afterwards, the operation of step S1205 is the same as that described in FIG. 11.

### Option#2

In step S1205, the MME includes context information on PDN connection and/or bearer and/or UE (Remote UE/UE-to-Network Relay), which is desired to be provided to the UE, in an initial context setup request message when transmitting the initial context setup request message to the eNodeB in step S1104 of FIG. 11. Therefore, the MME may determine PDN connection and/or bearer and/or UE (Remote UE/UE-to-Network Relay), which is desired to be provided to the UE, on the basis of the information in the DDN message received from the S-GW through step S1202a. If the information received from the S-GW is the information on PDN connection and/or UE, the MME may include bearer related information desired to provide service in the message on the basis of the information received from the S-GW.

As a result, a user plane is formed for only PDN connection and/or bearer and/or UE (Remote UE/UE-to-Network Relay), which is desired to provide service to the UE, between the UE and the eNodeB and between the eNodeB and the S-GW (or user plane resource is allocated or bearer is activated).

### UE triggered Service Initiation operation

Referring to clause 5.3.3 (Tracking Area Update procedures) of TS 23.401, the UE sets an active flag and transmits a TAU request message to the MME if the UE desires to request an operation for forming a user plane while performing a TSU. For this reason, as the TAU is performed, a radio bearer between the UE and the eNodeB and S1 bearer between the eNodeB and the S-GW are all activated.

In the present invention, when the UE transmits a TAU Request message to the MME, if the UE intends to form a user plane (this is an example, due to occurrence of MO traffic), the UE includes information (this may be PDN connection used when MO traffic is transmitted) on PDN connection and/or bearer (this may be a bearer used when MO traffic is transmitted) and/or UE (this is UE that has generated MO traffic, Remote UE or UE-to-Network Relay), which is desired to receive service, in the message. The information on PDN connection and/or bearer and/or UE (Remote UE/UE-to-Network Relay), which is desired to receive service, will be understood with reference to the aforementioned description of FIG. 11. Also, when the UE transmits the TAU request message, the UE may include Active flag in the TAU request message or not, or may include a new type flag in the TAU request message. The new type flag may be a flag for requesting the MME to activate the user plane for the PDN connection and/or bearer and/or UE (Remote UE/UE-to-Network Relay) (or to activate some user plane only).

### PDN connection (or session management) state management in UE and MME

In the related art, if there is no user plane between the UE and the eNodeB and between the eNodeB and the S-GW (or if there is no bearer or the user plane is not activated), the UE may be regarded as an IDLE state. However, in the present invention, since the user plane is activated in a unit of PDN connection and/or bearer and/or UE (in this case, the UE-to-Network Relay services the remote UE), which is actually desired to receive service or provide service), the UE and the MME need to manage the state or status as to whether user plane resources are allocated in a unit of PDN connection and/or bearer and/or UE.

Therefore, the UE and the MME may store/manage an active state or inactive state in context for PDN connection/bearer/UE managed by themselves. The active state information may indicate whether PDN connection related bearer in an interval of the UE and the eNodeB and/or an interval of the eNodeB and the S-GW is active (or whether user plane resources are allocated). The active state may be regarded as PDN connection connected or SM(Session Management) connected or bearer connected or Remote UE connected or UE-to-Network Relay connected state.

The PDN connection/bearer/UE state may be used in parallel with the MM(Mobility Management) state (that is, MM IDLE state or MM connected state) of the related art, may substitute for the MM state of the related art, or may be used in a type unified/combined with the MM state of the related art. Also, the PDN connection/bearer/UE state may be used in parallel with the SM state (that is, bearer context is active or inactive) of the related art, may substitute for the SM state of the related art, or may be used in a type unified/combined with the SM state of the related art.

In the aforementioned description, a necessary bearer (that is, bearer required for service) is activated in the interval of the UE and the eNodeB and the interval of the eNodeB and the S-GW. However, the bearer is always activated for one of the two intervals regardless of service in the same manner as the relate dart, and the necessary bearer may be activated for the other interval. For example, in case of the interval of the UE and the eNodB, which is a radio interval where resource should be managed relatively well, the bearer is only activated for PDN connection and/or bearer and/or UE (UE-to-Network Relay/Remote UE), which is desired to provide service or receive service as described above. In case of the interval of the eNodeB and the S-GW, if at least one of S1 bearers should be activated for all PDN connections generated by the UE, all of S 1 bearers may be activated in the same manner as the related art.

### PDU session activation in 5G system

The aforementioned description may be applied to operation and management information in a next generation (fifth generation) mobile communication system to be suitable for a network structure. PDN connection may be regarded as connection or session that provides a connection service with an external network (generally, referred to as PDN) of MNO network. This connection may service IP traffic or non-IP traffic.

At this time, this connection may be recognized/formed in a unit of APN in the same manner as the related art, or may be service unit and/or usage type and/or slice unit. However, without limitation to this case, various types of information may be used as an identifier of connection/session. A type of the connection/session identifier may include a scaler value or an integer value. Alternatively, the connection/session identifier type may be information indicating the order of connection/session generated by the UE. The expression that APN information should be included in the message means that information for recognizing/identifying connection is included in the message in the next generation system. For example, if the connection is a unit of service, the connection is information indicating service to be initiated, and if the connection is a unit of slice, the connection is information indicating slice that provides service to be initiated. Also, if one slice provides a plurality of services, the connection may include only information indicating service to be initiated or may include information indicating service to be initiated together with information indicating an associated slice. A type of the connection/session identifier may include a scaler value or an integer value. Alternatively, the connection/session identifier type may be information indicating the order of connection/session generated by the UE.

The MME may be construed/regarded as a function or entity or node or control function or control plane entity on a network which involves in mobility management and/or paging and/or user plane resource activation/allocation of PDN connection in the next generation system.

This control function may exist per slice if a slice structure is used, and one control function may exist for all slices (that is, one exists to serve UE in view of UE), and may manage a plurality of slices. However, several control functions may serve UE. Also, this control function may be a function which belongs to a core network, or a function which belongs to RAN, or may be an entity or function which performs intermediate/interworking between the CN and the RAN.

The eNodeB may be construed/regarded as a RAN (or Access Network or RAN entity/node) in the next generation system, and the S-GW may be construed/regarded as a gateway (or user plane entity/node) on the core network connected with the RAN.

Since a network structure and various procedures of the next generation system are still being studied, it is to be understood that the above descriptions drafted based on the EPS may be applied to the network structure, various procedures and managed information of the next generation system. For example, if a bearer concept is not applied to PDN connection in the next generation system, it means that activation of the aforementioned bearer should be construed and applied as activation of the user plane. Activation of the user plane may be may be construed that user plane entity/function/node/gateway is selected/allocated/designated. Since a user plane which does not need a service (which does not need to receive or provide service) does not need activation, it may be regarded that a corresponding user plane entity/function/node/gateway is not selected/allocated/designated.

When the required thing among connections/sessions generated by the UE, that is, connection/session desired by the user to receive service or connection/session that should provide service to the UE is selectively activated, a difference between the RAN of the GPRS and the RAN of the 5G system and effect of the RAN in the 5G system are as follows. A relation between the RAN and GW for forming a user plane, that is, SGSN is 1:1 for PDP context in the GPRS, whereas a relation between the RAN and GW for forming a user plane, that is, UPF may be 1: many for PDU session in the 5G system. Logically, tunnel information for user traffic routing with the GW is similarly managed in the RAN per PDP context in case of the GPRS and per PDU session in case of the 5G system. However, physically, a relation of a plurality of UPFs and a user plane interface (that is, N3 interface) should be maintained in case of the 5G system. Therefore, activation of a physical user plane interface with UPF which is not required and overhead for maintaining activation may be reduced.

As described above, the present invention may be applied to all of the case that one RAN and one CN GW for providing service to the UE exist, the case that one of the RAN and the CN GW exists in a plural number and the case that both of the RAN and the CN GW exist in a plural number.

Also, the present invention may be applied to the case that a slice structure is used in the network system, the case that a slice structure is not used in the network system, and the case that the UE receives a plurality of services through one slice even though the slice structure is used.

### Relay operation

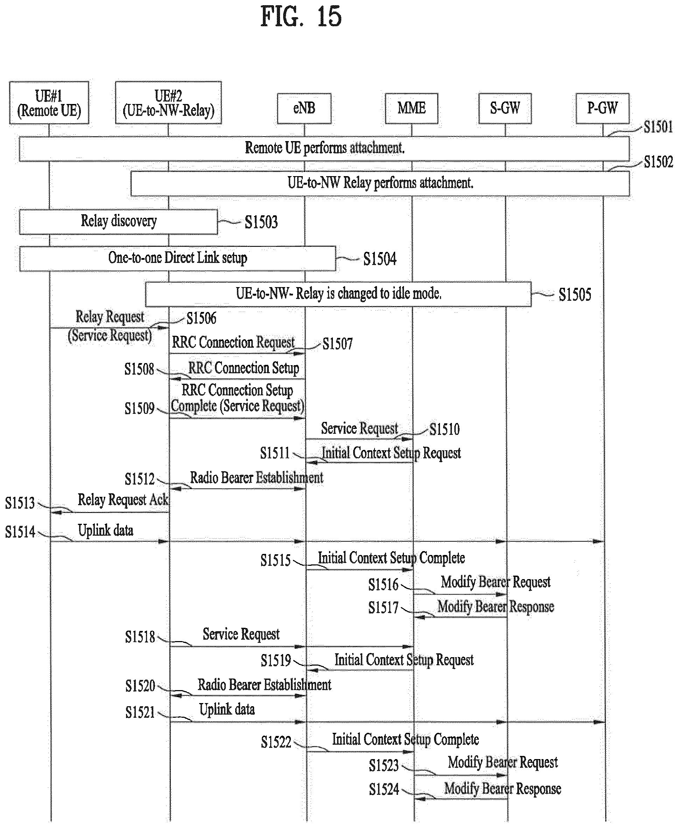

A relay related operation according to one embodiment of the present invention is shown in FIG. 15. Referring to FIG. 15, in step S1501, UE#1 is attached to the network. In step S1502, UE#2 is attached to the network. The step S1502 may be performed prior to the step S1501, and the steps S1501 and 1502 may be performed at a similar time. Attachment procedures of the steps S1501 and S1502 apply in clause 5.3.2.1 of TS 23.401 (E-UTRAN Initial Attach). In step S1503, UE#1 searches for a UE-to-Network Relay which will provide a network connection service. In this case, the relay may be a Layer-3 relay, a Layer-2 relay, or a relay that provides both the layer-3 relay and the layer-2 relay. A search mode of the relay may be a model A type (UE which serves as a relay may search for a relay by announcing), or may be a model B type (if UE which looks for a relay performs solicitation, UE which serves as a relay may search for the relay by responding to solicitation).

In step S1504, UE#1 which has selected UE#2 as a relay performs one-to-one direct link setup with the UE#2. At this time, or afterwards, the eNB may recognize that two UEs have formed a Relay-Remote relation. In this case, the eNB may be eNB that serves UE#2 which serves as a relay. However, a case may additionally occur in that eNB which serves as a remote should recognize the Relay-Remote relation. Although FIG. 15 illustrates that two UEs are served by the same eNB, the two UEs may be served by their respective eNBs different from each other. The MME may recognize that two UEs have formed the Relay-Remote relation, together with the eNB or instead of the eNB. In this case, the MME may be MME that serves UE#2 which serves as a relay. However, the MME which serves as a remote should additionally recognize that the two UEs have formed the Relay-Remote Relation. Although FIG. 15 illustrates that two UEs are served by the same MME, the two UEs may be served by their respective MMEs different from each other.

In step S1505, UE#2 enters to IDLE mode from RRC connected mode. For this reason, S1-U tunnel formed by the eNB and the S-GW is released for UE#1. Also, radio resources formed between the UE#2 and the eNB are released. That is, user planes in the interval of the UE#2 and the eNB and the interval of the eNB and the CN are all released. This is because that there is no data traffic or signaling between the UE#2 and the network as a main example that the UE#2 enters to the IDLE mode. In step S1506, the UE#1 transmits a message indicating that uplink traffic to the network has occurred to the UE#2. FIG. 15 illustrates that the service request message is included in a relay request message corresponding to PC5 signaling and then transmitted. In this case, NAS message for a service request procedure such as service request of the related art and extended service request may be used as the service request message or may be extended to be used as the service request message. Otherwise, the service request message may be NAS message newly defined for the present invention. Alternatively, the UE#1 may notify that uplink traffic has occurred by transmitting PC5 signaling message only, or may directly transmit uplink traffic to the UE2.

In step S1507, since the UE#2 is in the IDLE mode, the UE#2 should establish RRC connection with the eNB. Therefore, the UE#2 transmits RRC connection request message to the eNB. In step S1508, the eNB transmits RRC connection setup message to the UE#2. In step S1509, the UE#2 transmits RRC connection setup complete message to the eNB. The RRC connection setup complete message includes a service request message for activating a user plane for the UE#1. Therefore, the service request message and/or the RRC connection setup complete message includes information on the UE#1. In step S1510, the eNB transmits the service request message to the MME. If a serving MME of the UE#1 is different from a serving MME of the UE#2, the service request message may be transmitted to the serving MME of the UE#1.

If eNB which serves the UE#1 is different from eNB which serves the UE#2, the service request message included in the RRC connection setup complete message transmitted from the UE#2 may be delivered to the eNB, which serves the UE#1, by a serving eNB of the UE#2. Afterwards, the eNB which serves the UE#1 transmits the RRC connection setup complete message to the serving MME of the UE#1. When the eNB transmits the service request message to the MME, the eNB may include information on the UE#1 in S1AP message. In step S1511, the MME transmits an initial context setup request message to the eNB. This message includes S1-U tunnel inforamtion for routing user traffic of the UE#1, that is, information on the S-GW. In step S1512, the eNB performs a radio bearer establishment operation for the UE#2 and the UE#1. That is, the eNB forms a user plane radio bearer (that is, DRB) for user traffic transmission and reception of the UE#1. In step S1513, the UE#2 transmits a message, which indicates that user traffic can be transmitted, to the UE#1. For example, the UE#2 transmits a Relay Request Ack message corresponding to PC5 signalling. In step S1514, the UE#1 transmits uplink data to the network through the UE#2 which is a relay.

In step S1515, the eNB transmits the initial context setup complete message to the MME. This message includes S1-U tunnel information for routing user traffic of the UE#1, that is, information on the eNB. In step S1516, the MME transmits a modify bearer request message to the S-GW to provide information received from the eNB. In step S1517, the S-GW responds to the MME by using a Modify bearer Response message. In step S1518, the UE#2 performs an operation for forming a user plane for transmitting user traffic because uplink traffic to the network has occurred. FIG. 15 illustrates that the service request message is transmitted. In this case, NAS message for a service request procedure such as service request of the related art and extended service request may be used as the service request message or may be extended to be used as the service request message. Otherwise, the service request message may be NAS message newly defined for the present invention.

In step S1519, the MME transmits an initial context setup request message to the eNB. This message includes S1-U tunnel information for routing user traffic of the UE#2, that is, information on the S-GW. In step S1520, the eNB performs a radio bearer establishment operation with the UE#2. That is, the eNB forms a user plane radio bearer (that is, DRB) for user traffic transmission and reception of the UE#2. In step S1521, the UE#2 transmits uplink data to the network.

In step S1522, the eNB transmits the initial context setup complete message to the MME. This message includes S1-U tunnel information for routing user traffic of the UE#2, that is, information on the eNB. In step S1523, the MME transmits a modify bearer request message to the S-GW to provide information received from the eNB. In step S1524, the S-GW responds to the MME by using a Modify bearer Response message. Details of the service request procedure which is not described in the aforementioned description apply in clause 5.3.4.1 of TS 23.401 (UE triggered service request).

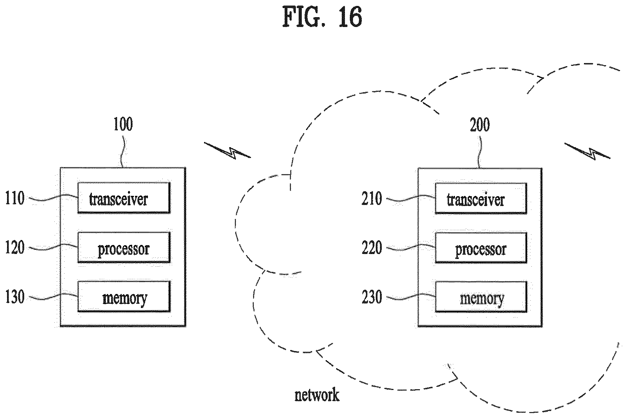

FIG. 16 is a diagram illustrating a configuration of a node apparatus according to the embodiment of the present invention.

Referring to FIG. 16, a UE 100 according to the present invention may include a transceiving module 110, a processor 120 and a memory 130. The transceiving module 110 may be configured to transmit various signals, data and information to an external device and receive various signals, data and information from the external device. The UE 100 may be connected with the external device through the wire and/or wireless. The processor 120 may control the overall operation of the UE 100, and may be configured to perform a function of operation-processing information to be transmitted to and received from the external device. The memory 130 may store the operation-processed information for a predetermined time, and may be replaced with a buffer (not shown). Also, the processor 120 may be configured to perform a UE operation suggested in the present invention. In detail, the processor 120 may be configured to allow the UE to be shifted to the IDLE mode and to transmit a registration request message, which includes location registration-related information, to the AMF (Core Access and Mobility Management Function) through RAN (Radio Access Network), and to receive a registration Ack message from the RAN as a response to the registration request message, wherein the registration request message may include information on a first PDU (Protocol Data Unit) session for activation.

Referring to FIG. 16, the network node apparatus 200 according to the present invention may include a transceiving module 210, a processor 220, and a memory 230. The transceiving module 210 may be configured to transmit various signals, data and information to an external device and to receive various signals, data and information from the external device. The network node apparatus 200 may be connected with the external device through the wire and/or wireless. The processor 220 may control the overall operation of the network node apparatus 200, and may be configured to allow the network node apparatus 200 to perform a function of operation-processing information to be transmitted to and received from the external device. The memory 230 may store the operation-processed information for a predetermined time, and may be replaced with a buffer (not shown). Also, the processor 220 may be configured to perform a network node operation suggested in the present invention.

Also, the details of the aforementioned UE 100 and the aforementioned network node apparatus 200 may be configured in such a manner that the aforementioned various embodiments of the present invention may independently be applied to the aforementioned UE 100 and the aforementioned network node apparatus 200, or two or more embodiments may simultaneously be applied to the aforementioned UE 100 and the aforementioned network node apparatus 200, and repeated description will be omitted for clarification.

The aforementioned embodiments according to the present invention may be implemented by various means, for example, hardware, firmware, software, or their combination.

If the embodiments according to the present invention are implemented by hardware, the method according to the embodiments of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

If the embodiments according to the present invention are implemented by firmware or software, the method according to the embodiments of the present invention may be implemented by a type of a module, a procedure, or a function, which performs functions or operations described as above. A software code may be stored in a memory unit and then may be driven by a processor. The memory unit may be located inside or outside the processor to transmit and receive data to and from the processor through various means which are well known.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. It is also obvious to those skilled in the art that claims that are not explicitly cited in each other in the appended claims may be presented in combination as an embodiment of the present invention or included as a new claim by a subsequent amendment after the application is filed.

### INDUSTRIAL APPLICABILITY

Although the aforementioned various embodiments of the present invention have been described based on the 3GPP system, the aforementioned embodiments may equally be applied to various mobile communication systems.

## Claims

1. A method for transmitting/receiving a location registration-related message by a user equipment (UE) in a wireless communication system, the method comprising the steps of:
entering, by the UE, to an idle mode;
transmitting, by the UE, a registration request message including location registration-related information to a AMF (core access and mobility management function) through a RAN (radio access network); and
receiving, by the UE, a registration accept message from the AMF through the RAN as a response to the registration request message,
wherein the registration request message includes information related to a first PDU (protocol data unit) session for activation.

2. The method according to claim 1, wherein the information related to the first PDU session is information for identifying the first PDU session, and only a network node related to the information for identifying the first PDU session receives a context of the UE.

3. The method according to claim 1, wherein the UE transmits uplink data to the RAN, the uplink data being delivered to a UPF (User Plane Function) related to the first PDU session.

4. The method according to claim 1, wherein the first PDU session is established before the UE enters to the IDLE mode.

5. The method according to claim 4, wherein the first PDU session is not disconnected before the UE enters to the IDLE mode.

6. The method according to claim 1, wherein the location registration-related information includes one or more of information as to periodic location registration, information as to location registration according to movement, and information as to location registration according to UE capability modification.

7. The method according to claim 3, wherein the UE transmits a service request message to the AMF through the RAN if uplink data which do not correspond to the first PDU session information and are related to a second PDU session occur.

8. The method according to claim 7, wherein the service request includes information related to the second PDU session.

9. The method according to claim 7, wherein the second PDU session is established before the UE enters to the IDLE mode.

10. The method according to claim 9, wherein the second PDU session is not disconnected before the UE enters to the IDLE mode.

11. The method according to claim 3, wherein the UE transmits a PDU session establishment request message to the AMF through the RAN if uplink data related to a third PDU session without being established before the UE enters to the IDLE mode occur.

12. A UE for transmitting and receiving a location registration-related message in a wireless communication system, the UE comprising:
a transceiving module; and
a processor,
wherein the processor transmits a registration request message including location registration-related information to a AMF (core access and mobility management function) through a RAN (radio access network) by using the transceiving module after the UE enters to an IDLE mode, and receives a registration accept message from the AMF through the RAN as a response to the registration request message by using the transceiving module, wherein the registration request message includes information related to a first PDU (protocol data unit) session for activation.
